# EUROPÄISCHE PATENTSCHRIFT

(11) **EP 3 390 817 B1**
(45) Veröffentlichungstag und Bekanntmachung des Hinweises auf die Patenterteilung: **23.02.2022**
(21) Anmeldenummer: 16805473.2
(22) Anmeldetag: 05.12.2016
(51) Int. Cl.: F03D 80/40, F03D 17/00

(54) **VERFAHREN UND VORRICHTUNG ZUM BETREIBEN EINER WINDKRAFTANLAGE**
APPLICATIONS OF A OPTICAL FIBER TORSION SENSOR
APPLICATIONS D'UN CAPTEUR DE TORSION DE FIBRE OPTIQUE

(30) Priorität: 16.12.2015 DE 102015121981
(43) Veröffentlichungstag der Anmeldung: 24.10.2018
(73) Patentinhaber: FOS4X GmbH, 81371 München (DE)
(72) Erfinder: MÜLLER, Mathias, 81541 München (DE); SCHUBERT, Matthias, 24768 Rendsburg (DE); MAI, Manuel, 85435 Erding (DE)
(74) Vertreter: Kilchert, Jochen
(86) Internationale Anmeldenummer: PCT/EP2016/079761
(87) Internationale Veröffentlichungsnummer: WO 2017/102404

(56) Entgegenhaltungen:
- EP-A1- 2 317 327
- EP-A1- 2 848 805
- WO-A2-2012/000509
- US-B1- 8 757 003

## Beschreibung

Die Offenbarung betrifft ein Verfahren und eine Vorrichtung zum Betreiben einer Windkraftanlage, und insbesondere ein Verfahren, das eine Torsionsmessung in einem Rotorblatt der Windkraftanlage verwendet, um Parameter, beispielsweise Betriebsparameter, der Windkraftanlage zum bestimmen und/oder einzustellen.

### Stand der Technik

Betriebsparameter von Windkraftanlagen werden oftmals kontinuierlich oder in bestimmten Zeitintervallen überprüft und eingestellt. Viele mechanische Anlagenteile sind statischen oder dynamischen Belastungen unterworfen, so dass eine Soll-Einstellung beispielsweise eines Anstellwinkels eines Rotorblatts von einem tatsächlichen Anstellwinkel abweichen kann. Eine Regelung oder Steuerung solcher Betriebsparameter, beispielsweise des Anstellwinkels, kann somit nicht präzise erfolgen, da oftmals lediglich die Soll-Einstellung bekannt ist.

Daher ist es eine Bedürfnis, ein Verfahren und eine Vorrichtung zum Betreiben einer Windkraftanlage weiter zu verbessern. Insbesondere ist es ein Bedürfnis, eine Regelung oder Steuerung bestimmter Betriebsparameter von Windkraftanlagen weiter zu verbessern.

Das Dokument EP 2 317327 A1 betrifft ein Windturbinen-Sensorsystem, bei welchem Spannungen mittels oberflächenmontierter oder eingebetteter optischer Fasern gemessen werden. Es wird auch ein Blatt-Torsionsmoment erwähnt. Dieses soll allerdings berechnet, aber nicht gemessen werden.

### Offenbarung der Erfindung

Es ist die Aufgabe der vorliegenden Offenbarung, ein Verfahren und eine Vorrichtung zum Betreiben einer Windkraftanlage anzugeben, die eine präzise Regelung oder Steuerung von Betriebsparametern ermöglichen. Insbesondere ist eine Aufgabe der vorliegenden Offenbarung, Ist-Werte von Betriebsparametern zuverlässig zu bestimmen.

Diese Aufgabe wird durch den Gegenstand der unabhängigen Ansprüche gelöst.

Gemäß Ausführungsformen der vorliegenden Offenbarung ist ein Verfahren zum Betreiben einer Windkraftanlage angegeben. Das Verfahren umfasst ein Messen einer Torsion zwischen einem ersten Punkt und einem davon beabstandeten zweiten Punkt eines Rotorblattes einer Windkraftanlage, und ein Bestimmen wenigstens eines Parameters der Windkraftanlage basierend auf der gemessenen Torsion. Der Parameter ist aus der Gruppe ausgewählt, die einen Anstellwinkel des Rotorblattes, einen Pitchwinkel, eine Windgeschwindigkeit, einen Anströmwinkel, eine Anströmgeschwindigkeit, und jede Kombination davon umfasst.

Gemäß einem weiteren Aspekt der vorliegenden Offenbarung ist ein Verfahren zum Betreiben einer Windkraftanlage angegeben. Das Verfahren umfasst ein Messen einer Torsion zwischen einem ersten Punkt und einem davon beabstandeten zweiten Punkt eines Rotorblattes einer Windkraftanlage, und ein Durchführen einer Frequenzanalyse eines Messsignals, das die Torsion angibt

Gemäß einem anderen Aspekt der vorliegenden Offenbarung ist eine Vorrichtung zum Betreiben einer Windkraftanlage angegeben. Die Vorrichtung umfasst einen oder mehrere Torsionssensoren und eine Steuerungsvorrichtung, die eingerichtet ist, um das Verfahren gemäß den hier beschriebenen Ausführungsformen auszuführen.

Bevorzugte, optionale Ausführungsformen und besondere Aspekte der Offenbarung ergeben sich aus den abhängigen Ansprüchen, den Zeichnungen und der vorliegenden Beschreibung.

Gemäß den Ausführungsformen der vorliegenden Offenbarung wird eine Torsionsmessung in Rotorblättern von Windkraftanlagen durchgeführt. Beispielsweise können Torsionssensoren bereitgestellt sein, um Torsionen in Rotorblättern an mehreren Querschnitten und/oder Radien zu messen. Die gemessene Torsion erlaubt einen Rückschluss auf tatsächliche Einstellungen und Werte sowie auf Betriebszustände, wie beispielsweise Anstellwinkel, Anströmwinkel, Anströmgeschwindigkeiten und Flatterbewegungen des Rotorblatts. Eine präzise Einstellung von Betriebsparametern, wie beispielsweise des Anstellwinkels kann basierend auf den bestimmten tatsächlichen Einstellungen und Werten und/oder Betriebszuständen vorgenommen werden. Eine Effizienz der Windkraftanlage kann verbessert werden.

### Kurze Beschreibung der Zeichnungen

Ausführungsbeispiele der Offenbarung sind in den Figuren dargestellt und werden im Folgenden näher beschrieben. Es zeigen:
Figur 1 eine schematische Darstellung eines Rotorblatts mit zwei Punkten zum Messen einer Torsion gemäß Ausführungsformen der vorliegenden Offenbarung,
Figur 2 eine schematische Darstellung eines Rotorblatts mit segmentweiser Messung einer Torsion gemäß Ausführungsformen der vorliegenden Offenbarung,
Figur 3 eine schematische Darstellung eines Rotorblatts mit zwei Punkten zum Messen einer Torsion gemäß weiteren Ausführungsformen der vorliegenden Offenbarung, und
Figur 4 eine schematische Darstellung eines Torsionssensors, der gemäß Ausführungsformen der vorliegenden Offenbarung zum Messen der Torsion verwendet werden kann.

### Ausführungsformen der Offenbarung

Im Folgenden werden, sofern nicht anders vermerkt, für gleiche und gleichwirkende Elemente gleiche Bezugszeichen verwendet.

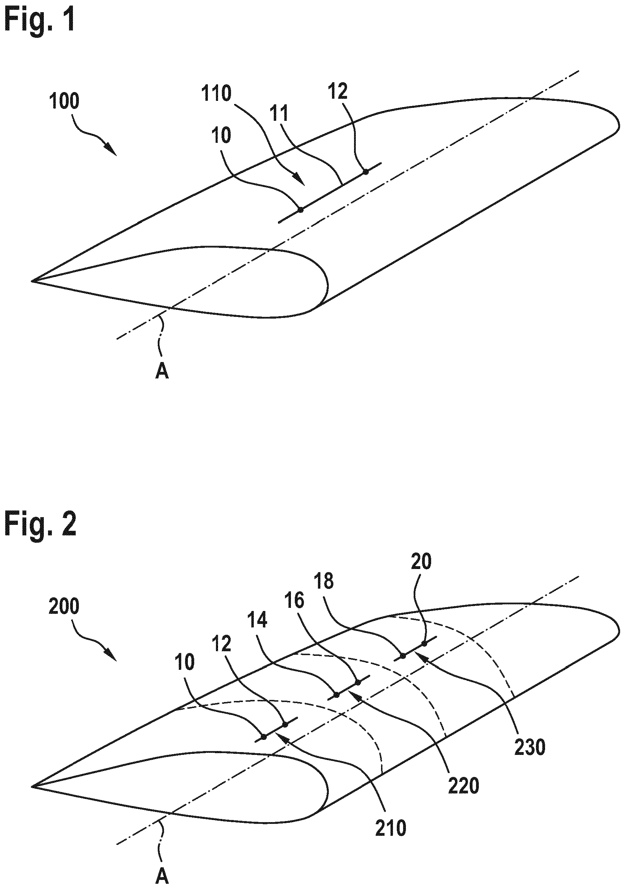

Figur 1 zeigt schematische Darstellung eines Rotorblatts 100 mit zwei Punkten zum Messen einer Torsion gemäß Ausführungsformen der vorliegenden Offenbarung. Die Torsion kann unter Verwendung eines oder mehrerer Torsionssensoren 110 gemessen werden.

Der Torsionssensor 110 umfasst einen ersten Punkt 10 und einen zweiten Punkt 12, die durch eine Lichtleiter-Faser 11 miteinander verbunden sind. Eine Torsion des Rotorblatts 100 um eine Verwindungsachse bewirkt eine Änderung des Drehwinkels der Lichtleiter-Faser 11 von dem ersten Punkt 10 gegenüber dem zweiten Punkt 12. Die Veränderung des Drehwinkels bewirkt eine Polarisationsänderung von Licht, das durch die Lichtleiter-Faser 11 läuft. Aus der Polarisationsänderung können die Änderung des Drehwinkels und damit die Torsion des Rotorblatts 100 bestimmt werden. Gemäß Ausführungsformen verlaufen die Verwindungsachse und/oder die Lichtleiter-Faser 11 entlang einer Längsstreckung A des Rotorblatts 100, beispielsweise im Wesentlichen parallel dazu. Die Längserstreckung A kann gemäß Ausführungsformen einer Rotorblattachse entsprechen oder eine Rotorblattachse sein.

Gemäß Ausführungsformen, die mit anderen hier beschriebenen Ausführungsformen kombiniert werden können, ist der Torsionssensor 110 in das Rotorblatt 100 integriert oder auf einer Oberfläche des Rotorblatts 110 angeordnet. Insbesondere ist der Torsionssensor 110 mechanisch mit dem Rotorblatt 110 verbunden, so dass eine Verwindung des Rotorblatts 100 um die Verwindungsachse eine Änderung des Drehwinkels der Lichtleiter-Faser 11 von dem ersten Punkt 10 gegenüber dem zweiten Punkt 12 bewirkt.

Gemäß einem Aspekt der Offenbarung umfasst ein Verfahren zum Betreiben einer Windkraftanlage ein Messen einer Torsion zwischen dem ersten Punkt 10 und dem davon beabstandeten zweiten Punkt 12 des Rotorblattes 100 der Windkraftanlage, und ein Bestimmen wenigstens eines Parameters, insbesondere eines Ist-Werts des wenigstens eines Parameters, der Windkraftanlage basierend auf der gemessenen Torsion. Der wenigstens eine Parameter ist aus der Gruppe ausgewählt, die aus einem Anstellwinkel des Rotorblattes, einem Pitchwinkel, einer Windgeschwindigkeit, einem Anströmwinkel und einer Anströmgeschwindigkeit besteht.

Parameter der Windanlage sind variable Größen mit Bezug auf einen Betrieb der Windkraftanlage. Beispielsweise können die Parameter Betriebsparameter der Windkraftanlage sein oder Betriebsparameter umfassen. Betriebsparameter können beispielsweise der Anstellwinkel des Rotorblattes und der Pitchwinkel sein. Typischerweise wird der Anstellwinkel bezüglich einer Referenzebene definiert. Der Pitchwinkel kann eine Winkeleinstellung des Rotorblatts 100 bezüglich einer Nabe, an dem das Rotorblatts 100 drehbar gelagert ist, angegeben. Der Anströmwinkel kann einen Winkel zwischen einer durch das Rotorblatt 100 definierten Ebene und einer Windrichtung angeben. Die Anströmgeschwindigkeit kann eine relative Geschwindigkeit oder relative mittlere Geschwindigkeit angeben, mit der die Luft auf das Rotorblatt trifft. Die Windgeschwindigkeit kann eine absolute Windgeschwindigkeit angeben.

Die Parameter der Windkraftanlage können aus der gemessenen Torsion beispielsweise durch ein Vergleichen mit vorbestimmten Werten bestimmt werden. Beispielsweise können vorbestimmte Werte gespeichert sein, die aus Simulationen und/oder Tests und/oder Erfahrungswerten aus dem Betrieb der Windkraftanlage stammen können. Zusätzlich oder alternativ können Algorithmen verwendet werden, um die Messwerte der Torsion in die Parameter umzurechnen.

Gemäß einem Aspekt wird die Torsion bzw. ein Messsignal, das die Torsion angibt, in einem Steuerungs- oder Regelungsvorgang der Windkraftanlage verwendet. Gemäß einem Aspekt wird die Torsion fortlaufend gemessen und fortlaufend in dem Steuerungs- oder Regelungsvorgang verwendet. Fortlaufend bezeichnet sowohl eine kontinuierliche Messung, beispielsweise in einem analogen Regelungsverfahren, als auch ein kontinuierliches Sampling der Messgröße, beispielsweise bei einem digitalen Regelungsverfahren. Die Messung der Torsion des Rotorblatts mit Hilfe der hierin beschriebenen Verfahren und Vorrichtungen ist auf einfache Weise möglich, was es erlaubt, den Steuerungs- oder Regelungsvorgang zuverlässig auszuführen.

Insbesondere erlaubt die gemessene Torsion einen Rückschluss auf tatsächliche Einstellungen und Werte sowie auf Betriebszustände, wie beispielsweise Anstellwinkel, Anströmwinkel, Windgeschwindigkeit, Pitchwinkel, Anströmgeschwindigkeiten und Flatterbewegungen des Rotorblatts 100. Eine präzise Einstellung von Betriebsparametern, wie beispielsweise des Anstellwinkels und/oder des Pitchwinkels, kann basierend auf den bestimmten tatsächlichen (Ist-) Einstellungen und Werten und/oder Betriebszuständen vorgenommen werden. Eine Effizienz der Windkraftanlage kann verbessert werden.

In einigen Ausführungsformen umfasst das Verfahren weiter ein Vergleichen des wenigstens einen Parameters mit wenigstens einem Soll-Wert des wenigstens einen Parameters. Beispielweise kann der aus der Torsion bestimmte Ist-Wert des wenigstens eines Parameters, der einen tatsächlichen Wert des wenigstens eines Parameters angibt, von einem Soll-Wert abweichen. Eine Abweichung, wie beispielsweise eine Differenz, zwischen dem Ist-Wert und dem Soll-Wert kann bestimmt werden. In typischen Ausführungsformen kann das Verfahren weiter ein Einstellen des Anstellwinkels und/oder des Pitchwinkels des Rotorblatts 100 basierend auf der gemessenen Torsion, insbesondere basierend auf dem Vergleich mit dem wenigstens einen Soll-Wert, umfassen. Betriebsparameter der Windkraftanlage können mit verbesserter Präzision bestimmt und optional eingestellt werden.

Gemäß einem weiteren Aspekt der vorliegenden Offenbarung, der optional mit dem oben erläuterten Verfahren kombiniert werden kann, ist ein Verfahren zum Betreiben einer Windkraftanlage angegeben, das ein Messen einer Torsion zwischen einem ersten Punkt und einem davon beabstandeten zweiten Punkt eines Rotorblattes einer Windkraftanlage und ein Durchführen einer Frequenzanalyse eines Messsignals, das die Torsion angibt, umfasst. Insbesondere kann die Torsion kontinuierlich oder in vorbestimmten Zeitintervallen über einen Zeitraum gemessen werden, um das Messsignal zu erhalten. Die Frequenzanalyse des Messsignals kann Aufschluss über eine zeitliche Veränderung der Torsion geben. Beispielsweise kann durch die Frequenzanalyse eine zeitliche Veränderung des wenigstens einen Parameters bestimmt werden. Typischerweise umfasst die Frequenzanalyse eine Fourieranalyse.

In manchen Ausführungsformen kann das Verfahren weiter ein Bestimmen einer Flatterbewegung des Rotorblatts basierend auf der Frequenzanalyse umfassen. Die Flatterbewegung kann eine periodische oder nichtperiodische Schwingung des Rotorblatts 100 sein. Beim Vorhandensein einer Oszillation im Messsignal und/oder im zeitlichen Verlauf des bestimmten Parameters, beispielsweise des Anstellwinkels, kann auf eine Flatterbewegung des Rotorblatts 100 geschlossen werden. Das Vorhandensein einer Flatterbewegung kann bestimmt werden, wenn die Oszillation einem vorbestimmten Muster entspricht. Beispielsweise kann die Oszillation einen oder mehrere vorbestimmte Frequenzen (Frequenzanteile) und/oder Amplituden aufweisen, die das Vorhandensein einer Flatterbewegung angeben. Gemäß Ausführungsformen können ein oder mehrere Betriebsparameter, wie beispielsweise ein Anstellwinkel und/oder ein Pitchwinkel des Rotorblatts 100 eingestellt bzw. verändert werden, um die Flatterbewegung zu reduzieren oder abzustellen.

Gemäß Ausführungsformen, die mit anderen hier beschriebenen Ausführungsformen kombiniert werden können, kann das Durchführen der Frequenzanalyse ein Bestimmen einer Eigenfrequenz, insbesondere einer Torsionseigenfrequenz, umfassen. Das Verfahren kann ein Bestimmen einer Beaufschlagung des Rotorblatts 100 mit Fremdmaterial basierend auf der Torsionseigenfrequenz umfassen. Beispielsweise kann eine Beaufschlagung des Rotorblatts 100 mit Fremdmaterial bestimmt werden, wenn die Eigenfrequenz innerhalb eines vorbestimmten Frequenzbereichs liegt oder einer vorbestimmten Frequenz entspricht. Wenn die Eigenfrequenz außerhalb das vorbestimmten Frequenzbereichs liegt kann bestimmt werden, dass keine Beaufschlagung des Rotorblatts 100 mit Fremdmaterial vorliegt.

Das Fremdmaterial kann beispielsweise Eis oder ein Eisansatz sein. Gemäß Ausführungsformen können einer oder mehrere Betriebsparameter, wie beispielsweise ein Anstellwinkel und/oder ein Pitchwinkel des Rotorblatts eingestellt bzw. verändert werden, wenn eine Beaufschlagung mit Fremdmaterial vorliegt. Damit kann effektiv auf eine Beaufschlagung mit Fremdmaterial reagiert werden, beispielsweise um eine Leistungsfähigkeit der Windkraftanlage aufrecht zu erhalten und/oder um eine Beschädigung der Windkraftanlage zu vermeiden.

Figur 2 zeigt eine schematische Darstellung eines Rotorblatts 200 mit segmentweiser Messung einer Torsion gemäß Ausführungsformen der vorliegenden Offenbarung.

Gemäß einigen Ausführungsformen, die mit anderen hier beschriebenen Ausrufungen kombiniert werden können, erfolgt die Torsionsmessung unter Verwendung wenigstens eines weiteren Punkts auf dem Rotorblatt 200. Beispielsweise kann wenigstens ein dritter Punkt vorhanden sein. Eine erste Torsionsmessung kann zwischen dem ersten Punkt 10 und den zweiten Punkt 12 erfolgen. Eine zweite Torsionsmessung kann zwischen dem zweiten Punkt 12 und dem dritten Punkt erfolgen.

In einigen Ausführungsformen kann das Rotorblatt 200 in zwei oder mehr Segmente unterteilt sein. Die Torsionsmessung kann in wenigstens zwei Segmenten der zwei oder mehr Segmente des Rotorblatts 200 erfolgen. Beispielsweise können sich der erste Punkt 10 und der zweite Punkt 12 in einem ersten Segment 210 des Rotorblatts 200 befinden. Zumindest ein weiterer Punkt, und vorzugsweise zumindest zwei weitere Punkte können in einem zweiten Segment 220 des Rotorblatts 200 angeordnet sein.

Typischerweise kann die Torsionsmessung zwischen wenigstens zwei weiteren Punkten auf dem Rotorblatt 200 erfolgen. Beispielsweise kann das erste Segment 210 der zwei oder mehr Segmente den ersten Punkt 10 und den zweiten Punkt 12 umfassen. Das zweite Segment 220 der zwei oder mehr Segmente kann einen dritten Punkt 14 und einen vierten Punkt 16 umfassen. Ein drittes Segment 230 der zwei oder mehr Segmente kann einen fünften Punkt 18 und einen sechsten Punkt 20 umfassen. Typischerweise können im ersten Segment 210 ein erster Torsionssensor, im zweiten Segment 220 ein zweiter Torsionssensor und im dritten Segment 230 ein dritter Torsionssensor vorhanden sein.

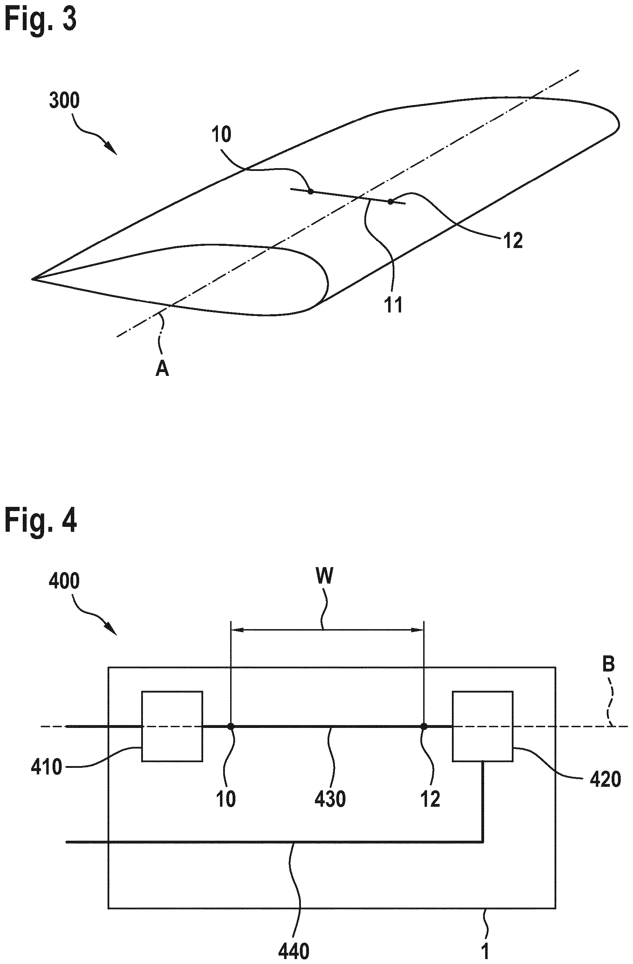

In einigen Ausführungsformen kann jedes Segment der zwei oder mehr Segmente einen eigenen Torsionssensor aufweisen, wie er beispielsweise unter Bezugnahme auf die Figur 4 beschrieben ist. In anderen Ausführungsformen kann ein einziger Torsionssensor vorhanden sein, der sich über die zwei oder mehr Segmente erstreckt.

Gemäß Ausführungsformen kann das Verfahren ein segmentweises Bestimmen der Anströmgeschwindigkeit umfassen. Beispielsweise kann für jedes Segment der zwei oder mehr Segmente eine jeweilige Anströmgeschwindigkeit bestimmt werden. In manchen Ausführungsformen können der Anstellwinkel und/oder der Pitchwinkel des Rotorblatts 200 segmentweise eingestellt werden. Beispielsweise können der Anstellwinkel und/oder der Pitchwinkel für wenigstens einige Segmente der zwei oder mehr Segment unabhängig voneinander eingestellt werden, insbesondere auf Basis der für das jeweilige Segment bestimmten (lokalen) Anströmgeschwindigkeit. Das segmentweise Einstellen des Anstellwinkels kann durch lokale Aktoren (z.B. Elektromotoren und/oder pneumatische Vorrichtungen) erfolgen, die den einzelnen Segmenten zugeordnet sind.

Durch das segmentweise Bestimmen der Torsion können beispielsweise ein Anstellwinkel und/oder ein Pitchwinkel des Rotorblatts effizienter eingestellt bzw. verändert werden. Damit kann eine Leistungsfähigkeit der Windkraftanlage verbessert werden.

Figur 3 zeigt eine schematische Darstellung eines Rotorblatts 300 mit zwei Punkten zum Messen einer Torsion gemäß weiteren Ausführungsformen der vorliegenden Offenbarung.

In den in den Figuren 1 und 2 gezeigten Ausführungsformen ist die Lichtleiter-Faser 11, und insbesondere eine Längserstreckung der Lichtleiter-Faser 11 des Torsionssensors entlang einer Längserstreckung A des Rotorblatts angeordnet. Beispielweise kann die Lichtleiter-Faser 11 des Torsionssensors im Wesentlichen parallel zur Längserstreckung des Rotorblatts angeordnet sein.

Im Beispiel der Figur 3 ist die Lichtleiter-Faser 11, und insbesondere eine Längserstreckung der Lichtleiter-Faser 11 des Torsionssensors im Wesentlichen senkrecht zur Längserstreckung A des Rotorblatts 300 angeordnet.

Die vorliegende Offenbarung ist jedoch nicht drauf beschränkt, und die Lichtleiter-Faser 11 des Torsionssensors kann jede Orientierung bezüglich der Längserstreckung A des Rotorblatts aufweisen. Beispielsweise können die Lichtleiter-Faser 11 und die Längsstreckung A des Rotorblatts jeden Winkel in einem Bereich von 0° (parallel) bis 90° (senkrecht) einschließen.

Gemäß Ausführungsformen, die mit anderen hier beschriebenen Ausführungsformen korrigiert werden können, ist eine Vorrichtung zum Betreiben einer Windkraftanlage angegeben. Die Vorrichtung umfasst einen oder mehrere Torsionssensoren und eine Steuerungsvorrichtung, die eingerichtet ist, um das Verfahren nach einem der hier beschriebenen Ausführungsformen auszuführen. Beispielweise kann die Windkraftanlage oder eine Steuerungsvorrichtung der Windkraftanlage die Vorrichtung umfassen.

Figur 4 zeigt eine schematische Darstellung eines Torsionssensors 400, der gemäß Ausführungsformen der vorliegenden Offenbarung zum Messen der Torsion verwendet werden kann.

Der Torsionssensor 400 umfasst eine Quelle 410 polarisierten Lichts, umfassend eine polarisierende Lichtquelle, die polarisiertes Licht emittiert, oder einen mit einer Lichtquelle optisch verbundenen Polarisator. Der Torsionssensor 400 umfasst eine erste Lichtleiter-Faser 430 (in den Figuren 1 bis 3 mit dem Bezugszeichen "11" angegeben), die mit dem Ausgang der Quelle 410 optisch verbunden ist und an dem Rotorblatt 1 (auch als "Messobjekt" bezeichnet) an dem ersten Punkt 10 und an dem zweiten Punkt 12 derart befestigt ist, dass eine Torsion des Rotorblatts 1 um eine Verwindungsachse B eine Änderung des Drehwinkels der ersten Lichtleiter-Faser 430 von dem ersten Punkt 10 gegenüber dem zweiten Punkt 12 bewirkt.

Der Torsionssensor 400 umfasst eine zweiten Lichtleiter-Faser 440, die im zweiten Punkt 12 oder in Bezug auf den Lichtpfad von der Quelle hinter dem zweiten Punkt 12 mit der ersten Lichtleiter-Faser 430 verbunden ist, zum Zuführen des Lichts zu einer Auswertungseinrichtung (nicht gezeigt). Die Auswerteeinrichtung kann die Vorrichtung sein, die zum Ausführen der Verfahren gemäß den hier beschriebenen Ausführungsformen eingerichtet ist. Die erste Lichtleiter-Faser 430 weist zumindest bereichsweise eine nicht polarisationserhaltende Faser auf. Die zweite Lichtleiter-Faser 440 ist eine polarisationserhaltende Faser. In Figur 4 ist der Abstand zwischen dem ersten Punkt 10 und dem zweiten Punkt 12 mit dem Bezugszeichen "w" bezeichnet.

Der Schritt zum Messen der Torsion im Verfahren gemäß den hier beschriebenen Ausführungsformen verwendet den oben beschriebenen Torsionssensor 400 und umfasst ein Bereitstellen der ersten Lichtleiter-Faser 430 zwischen dem ersten Punkt 10 und dem zweiten Punkt 12 des Rotorblatts 1 derart, dass eine Torsion des Rotorblatts 1 um die Verwindungsachse B eine Änderung des Drehwinkels der ersten Lichtleiter-Faser 430 von dem ersten Punkt 12 gegenüber dem zweiten Punkt 12 bewirkt, wobei die erste Lichtleiter-Faser 430 zumindest bereichsweise eine nicht polarisationserhaltende Faser aufweist. Das Verfahren umfasst ein Bereitstellen der zweiten Lichtleiter-Faser 440, die mit der ersten Lichtleiter-Faser 430 im zweiten Punkt 12 oder in Bezug auf einen Lichtpfad von dem ersten Punkt 10 zu dem zweiten Punkt 12 hinter dem zweiten Punkt 12 verbunden ist, und die von dem zweiten Punkt 12 wegführt, insbesondere wobei die zweite Lichtleiter-Faser 440 eine polarisationserhaltende Faser ist.

Das Verfahren umfasst weiter ein Einstrahlen von polarisiertem Licht mit einer bekannten Eintritts-Polarisationsausrichtung in die erste Lichtleiter-Faser 430, ein Erfassen einer Austritts-Polarisationsausrichtung des aus der zweiten Lichtleiter-Faser 440 austretenden Lichts, und ein Auswerten der Austritts-Polarisationsausrichtung in Bezug auf die Eintritts-Polarisationsausrichtung zum Bestimmen der Torsion.

In der dargestellten Ausführungsform ist die Quelle 410 selbst auf dem Rotorblatt 1 angeordnet. Die Offenbarung ist darauf jedoch nicht beschränkt. Insbesondere ist es auch möglich, die Quelle 410 abseits des Rotorblatts 1 anzuordnen und der ersten Lichtleiter-Faser 430 das polarisierte Licht mit einer Hilfs-Lichtleiter-Faser zuzuleiten.

Die erste Lichtleiter-Faser 430 ist mit der Quelle 410 optisch verbunden. Die erste Lichtleiter-Faser 430 ist mit polarisiertem Licht, das aus der Quelle 410 austritt, optisch beaufschlagbar. Die erste Lichtleiter-Faser 430 ist an dem Rotorblatt 1 am ersten Punkt 10 und am zweiten Punkt 12 derart befestigt, dass eine Torsion des Rotorblatts 1 um die Verwindungsachse B eine Änderung des Drehwinkels der ersten Lichtleiter-Faser 430 von dem ersten Punkt 10 gegenüber dem zweiten Punkt 12 bewirkt. Die Verwindungsachse B fällt nicht zwingend mit einer tatsächlichen geometrischen Achse des Rotorblatts 1 oder dergleichen zusammen, wie beispielsweise der Längserstreckung (in den Figuren 1 bis 3 mit dem Bezugszeichen "A" angegeben) des Rotorblatts. Vielmehr ist die Verwindungsachse B eine gedachte Linie durch das Rotorblatt 1 bzw. an der Oberfläche des Rotorblatts 1, um welche eine zu messende Torsion des Rotorblatts 1 stattfindet, wobei sich die zu messende Torsion in einer Änderung des Drehwinkels zwischen dem ersten Punkt 10 der ersten Lichtleiter-Faser 430 und dem zweiten Punkt 12 niederschlägt.

Ein erstes Ende der zweiten Lichtleiter-Faser 440 ist in der dargestellten Ausführungsform hinter dem zweiten Punkt 12 mittels einer Mess-Verbindungseinrichtung 420 mit einem Ende der ersten Lichtleiter-Faser 430 verbunden. Üblicherweise ist die Mess-Verbindungseinrichtung 420 ein Lichtwellenleiter-Spleiß, aber nicht darauf beschränkt. Denkbar ist beispielsweise auch eine Verbindung mittels geeigneter Lichtwellenleiter-Stecker oder dergleichen, sofern gewährleistet ist, dass durch diese keine unbekannte Veränderung der Polarisationsausrichtung erfolgt. Die zweite Lichtleiter-Faser 440 ist dazu ausgebildet, das Licht der Auswertungseinrichtung zuzuführen.

Im Betrieb des Torsionssensors 400 wird der ersten Lichtleiter-Faser 430 an ihrem ersten Ende polarisiertes Licht zugeführt. Eine Torsion des Rotorblatts 1 wird durch die Befestigung zwischen dem ersten Punkt 10 und dem zweiten Punkt 12 in eine Torsion der ersten Lichtleiter-Faser 430 umgesetzt. Der Torsionswinkel wird als Winkel zwischen Faser und der Polarisationsebene abgebildet. Infolge der nicht polarisationserhaltenden Eigenschaften der ersten Lichtleiter-Faser 430 ergibt sich bei einer Torsion des Rotorblatts 1 um die Verwindungsachse B eine Drehung der Polarisationsebene zwischen dem ersten Ende der ersten Lichtleiter-Faser 430 und dem zweiten Ende der ersten Lichtleiter-Faser 430. Die erste Lichtleiter-Faser 430 fungiert so als faseroptischer Sensor.

Gemäß einem Aspekt ist der Torsionssensor 400 zumindest teilweise auf einer Oberfläche des Rotorblatts 1 angeordnet. Insbesondere sind gemäß einem Aspekt der erste Punkt 10 und/oder der zweite Punkt 120 auf einer Oberfläche des Rotorblatts 1 angeordnet. Hierdurch können sich eine einfache Montage und eine einfache Austauschbarkeit des Torsionssensors 400 ergeben, beispielsweise zu Wartungszwecken. Gemäß weiteren Ausführungsformen ist der Torsionssensor 400 im Rotorblatt integriert. Beispielsweise ist der Torsionssensor 400 im Rotorblatt eingebettet.

Der Torsionssensor 400 kann eine Auswertungseinrichtung umfassen, beispielsweise die Vorrichtung gemäß den hier beschriebenen Ausführungsformen, die zum Ausführen des hier beschriebenen Verfahrens eingerichtet ist. Die Auswertungseinrichtung ist dazu ausgebildet, in Abhängigkeit eines detektierten Polarisationszustands ein entsprechendes Signal auszugeben. Das Signal ist geeignet codiert. Beispielsweise wird ein analoges oder ein digitales Steuerungssignal ausgegeben, welches Informationen über den detektierten Polarisationszustand enthält. Die Auswertungseinrichtung hat ebenfalls Informationen über den Polarisationszustand des Lichts, das in den ersten Punkt 10 der ersten Lichtleiter-Faser 430 eingestrahlt wird. Durch Vergleich des Polarisationszustands des Lichts, das in den ersten Punkt 10 der ersten Lichtleiter-Faser 430 eingestrahlt wird, mit dem Polarisationszustands des Lichts, das in dem Signal codiert ist, kann ein Rückschluss auf die Torsion des Rotorblatts 1 gezogen werden.

Gemäß den Ausführungsformen der vorliegenden Offenbarung wird eine Torsionsmessung in Rotorblättern von Windkraftanlagen durchgeführt. Beispielsweise können Torsionssensoren bereitgestellt sein, um Torsionen in Rotorblättern an mehreren Querschnitten und/oder Radien zu messen. Die gemessene Torsion erlaubt einen Rückschluss auf tatsächliche Einstellungen und Werte sowie auf Betriebszustände, wie beispielsweise Anstellwinkel, Anströmwinkel, Anströmgeschwindigkeiten und Flatterbewegungen des Rotorblatts. Eine präzise Einstellung von Betriebsparametern, wie beispielsweise des Anstellwinkels kann basierend auf den bestimmten tatsächlichen Einstellungen und Werten und/oder Betriebszuständen vorgenommen werden. Eine Effizienz der Windkraftanlage kann verbessert werden.

## Patentansprüche

1. Verfahren zum Betreiben einer Windkraftanlage, umfassend:
Messen einer Torsion zwischen einem ersten Punkt und einem davon beabstandeten zweiten Punkt eines Rotorblattes einer Windkraftanlage, vorzugsweise unter Verwendung eines Torsionssensors, der in das Rotorblatt integriert oder auf einer Oberfläche des Rotorblatts angeordnet ist; und
Bestimmen wenigstens eines Parameters, vorzugsweise eines Ist-Werts des wenigstens eines Parameters, der Windkraftanlage basierend auf der gemessenen Torsion, wobei der wenigstens eine Parameter aus der Gruppe ausgewählt ist, die einen Anstellwinkel des Rotorblattes, einen Pitchwinkel, eine Windgeschwindigkeit, einen Anströmwinkel und eine Anströmgeschwindigkeit umfasst,
wobei die Torsionsmessung unter Verwendung wenigstens eines weiteren Punkts auf dem Rotorblatt erfolgt, wobei vorzugsweise die Torsionsmessung zwischen wenigstens zwei weiteren Punkten auf dem Rotorblatt erfolgt,
wobei die Torsionsmessung in wenigstens zwei Segmenten des Rotorblatts erfolgt, wobei sich der erste Punkt und der zweite Punkt in einem ersten Segment des Rotorblatts befinden, und wobei sich zumindest ein weiterer Punkt in einem zweiten Segment des Rotorblatts befindet, und/oder wobei das Verfahren weiter umfasst: segmentweises Bestimmen einer Anströmgeschwindigkeit, und
wobei das Verfahren weiter umfasst: segmentweises Einstellen eines Anstellwinkels und/oder Pitchwinkels des Rotorblatts.

2. Das Verfahren nach Anspruch 1, weiter umfassend:
Vergleichen des wenigstens einen Parameters mit wenigstens einem Soll-Wert des wenigstens einen Parameters.

3. Das Verfahren nach Anspruch 1 oder 2, weiter umfassend:
Einstellen des Anstellwinkels und/oder des Pitchwinkels des Rotorblatts basierend auf der gemessenen Torsion, vorzugsweise basierend auf dem Vergleich mit dem wenigstens einen Soll-Wert.

4. Das Verfahren nach einem der Ansprüche 1 bis 3, ferner umfassend:
Messen einer Torsion zwischen einem ersten Punkt und einem davon beabstandeten zweiten Punkt eines Rotorblattes einer Windkraftanlage; und
Durchführen einer Frequenzanalyse eines Messsignals, das die Torsion angibt,
wobei das Durchführen der Frequenzanalyse umfasst:
Bestimmen einer Torsionseigenfrequenz.

5. Das Verfahren nach Anspruch 4, umfassend:
Bestimmen einer Flatterbewegung des Rotorblattes basierend auf der Frequenzanalyse.

6. Das Verfahren nach Anspruch 4, weiter umfassend:
Bestimmen einer Beaufschlagung des Rotorblatts mit Fremdmaterial basierend auf der Torsionseigenfrequenz.

7. Das Verfahren nach einem der Ansprüche 4 bis 6, wobei die Torsionsmessung unter Verwendung wenigstens eines weiteren Punkts auf dem Rotorblatt erfolgt, vorzugsweise wobei die Torsionsmessung zwischen wenigstens zwei weiteren Punkten auf dem Rotorblatt erfolgt.

8. Das Verfahren nach Anspruch 7, wobei die Torsionsmessung in wenigstens zwei Segmenten des Rotorblatts erfolgt, wobei sich der erste Punkt und der zweite Punkt in einem ersten Segment des Rotorblatts befinden, und wobei sich zumindest ein weiterer Punkt in einem zweiten Segment des Rotorblatts befindet.

9. Das Verfahren nach Anspruch 8, weiter umfassend:
segmentweises Bestimmen einer Anströmgeschwindigkeit.

10. Das Verfahren nach Anspruch 8 oder 9, weiter umfassend:
segmentweises Einstellen eines Anstellwinkel und/oder Pitchwinkels des Rotorblatts.

11. Das Verfahren nach Anspruch 10, wobei das segmentweise Einstellen des Anstellwinkels durch lokale Aktoren erfolgt, die den einzelnen Segmenten zugeordnet sind.

12. Das Verfahren nach einem der Ansprüche 1 bis 11, wobei das Messen der Torsion umfasst:
Bereitstellen einer ersten Lichtleiter-Faser zwischen dem ersten Punkt und dem zweiten Punkt des Rotorblatts derart, dass eine Torsion des Rotorblatts um eine Verwindungsachse eine Änderung des Drehwinkels der ersten Lichtleiter-Faser von dem ersten Punkt gegenüber dem zweiten Punkt bewirkt, vorzugsweise wobei die erste Lichtleiter-Faser zumindest bereichsweise eine nicht polarisationserhaltende Faser aufweist;
Bereitstellen einer zweiten Lichtleiter-Faser, die mit der ersten Lichtleiter-Faser im zweiten Punkt oder in Bezug auf einen Lichtpfad von dem ersten Punkt zu dem zweiten Punkt hinter dem zweiten Punkt verbunden ist, und die von dem zweiten Punkt wegführt, vorzugsweise wobei die zweite Lichtleiter-Faser eine polarisationserhaltende Faser ist; Einstrahlen von polarisiertem Licht mit einer bekannten Eintritts-Polarisationsausrichtung in die erste Lichtleiter-Faser;
Erfassen einer Austritts-Polarisationsausrichtung des aus der zweiten Lichtleiter-Faser austretenden Lichts; und
Auswerten der Austritts-Polarisationsausrichtung in Bezug auf die Eintritts-Polarisationsausrichtung zum Bestimmen der Torsion.

13. Vorrichtung zum Betreiben einer Windkraftanlage, umfassend:
einen oder mehrere Torsionssensoren; und
eine Steuerungsvorrichtung, die eingerichtet ist, um das Verfahren nach einem der Ansprüche 1-12 auszuführen.

## Claims

1. Method for operating a wind turbine, comprising:
measuring a torsion between a first point and a second point, which is at a distance from the first, of a rotor blade of a wind turbine, preferably using a torsion sensor integrated into the rotor blade or arranged on a surface of the rotor blade; and
determining at least one parameter, preferably an actual value of the at least one parameter, of the wind turbine based on the measured torsion, wherein the at least one parameter is selected from the group comprising an angle of attack of the rotor blade, a pitch angle, a wind speed, a flow angle and a free stream velocity,
wherein the torsion measurement is carried out using at least one further point on the rotor blade, wherein the torsion measurement preferably is carried out between at least two further points on the rotor blade,
wherein the torsion measurement is carried out in at least two segments of the rotor blade, wherein the first point and the second point are located in a first segment of the rotor blade, and wherein at least one further point is located in a second segment of the rotor blade, and/or wherein the method further comprises: segmentally determining a free stream velocity, and
wherein the method further comprises: segmentally adjusting an angle of attack and/or pitch angle of the rotor blade.

2. Method according to claim 1, further comprising:
comparing the at least one parameter with at least one target value of the at least one parameter.

3. Method according to claim 1 or 2, further comprising:
adjusting the angle of attack and/or the pitch angle of the rotor blade based on the measured torsion,
preferably based on the comparison with the at least one target value.

4. Method according to any one of claims 1 to 3, further comprising:
measuring a torsion between a first point and a second point, which is at a distance from the first, of a rotor blade of a wind turbine; and
performing a frequency analysis of a measurement signal indicating the torsion,
wherein performing the frequency analysis includes:
determining a torsional eigenfrequency.

5. Method according to claim 4, comprising:
determining a flutter of the rotor blade based on the frequency analysis.

6. Method according to claim 4, further comprising:
determining an application of foreign material onto the rotor blade based on the torsional eigenfrequency.

7. Method according to any one of claims 4 to 6, wherein the torsion measurement is carried out using at least one further point on the rotor blade, wherein the torsion measurement preferably is carried out between at least two further points on the rotor blade.

8. Method according to claim 7, wherein the torsion measurement is carried out in at least two segments of the rotor blade, wherein the first point and the second point are located in a first segment of the rotor blade, and wherein at least one further point is located in a second segment of the rotor blade.

9. Method according to claim 8, further comprising:
segmentally determining a free stream velocity.

10. Method according to claim 8 or 9, further comprising:
segmentally adjusting an angle of attack and/or pitch angle of the rotor blade.

11. Method according to claim 10, wherein segmentally adjusting the angle of attack is carried out by means of local actuators which are associated with the individual segments.

12. Method according to any one of claims 1 to 11, wherein measuring the torsion comprises:
providing a first light guide fibre between the first point and the second point of the rotor blade such that a torsion of the rotor blade about a torsion axis causes a change in the rotational angle of the first fibre light guide from the first point to the second point, preferably wherein the first light guide fibre has a non-polarisation-maintaining fibre in at least some regions;
providing a second light guide fibre which is connected to the first light guide fibre at the second point or, with respect to a light path from the first point to the second point, is connected behind the second point, and which extends away from the second point, preferably wherein the second light guide fibre is a polarisation-maintaining fibre;
irradiating polarised light having a known entry polarisation direction into the first light guide fibre;
detecting an exit polarisation of the light emerging from the second light guide fibre; and
evaluating the exit polarisation in relation to the entry polarisation to determine the torsion.

13. Device for operating a wind turbine, comprising:
one or more torsion sensors; and
a control device which is set up to carry out the method according to any one of claims 1-12.

## Revendications

1. Procédé pour faire fonctionner une éolienne, comprenant :
la mesure d'une torsion entre un premier point et un deuxième point, espacés de celui-ci, d'une pale de rotor d'une éolienne, de préférence à l'aide d'un capteur de torsion qui est intégré à la pale de rotor ou est disposé sur une surface de la pale de rotor ; et
la détermination d'au moins un paramètre, de préférence une valeur réelle du au moins un paramètre, de l'éolienne sur la base de la torsion mesurée, dans lequel le au moins un paramètre est choisi dans le groupe comprenant un angle d'attaque de la pale de rotor, un angle de pas, une vitesse du vent, un angle d'incidence et une vitesse d'affluence,
dans lequel la mesure de torsion a lieu à l'aide d'au moins un autre point sur la pale de rotor, la mesure de torsion ayant lieu de préférence entre au moins deux autres points sur la pale de rotor,
dans lequel la mesure de torsion a lieu dans au moins deux segments de la pale de rotor, dans lequel le premier point et le deuxième point sont situés dans un premier segment de la pale de rotor, et dans lequel au moins un autre point est situé dans un deuxième segment de la pale de rotor, et/ou dans lequel le procédé comprend en outre : la détermination par segment de la vitesse d'affluence, et
dans lequel le procédé comprend en outre : le réglage par segment d'un angle d'attaque et/ou d'un angle de pas de la pale de rotor.

2. Procédé selon la revendication 1, comprenant en outre :
la comparaison d'au moins un paramètre avec au moins une valeur de consigne du au moins un paramètre.

3. Procédé selon la revendication 1 ou 2, comprenant en outre :
le réglage d'attaque et/ou de l'angle de pas de la pale de rotor en fonction de la torsion mesurée, de préférence en fonction de la comparaison avec la au moins une valeur de consigne.

4. Procédé selon une quelconque des revendications 1 à 3, comprenant en outre :
la mesure d'une torsion entre un premier point et un deuxième point, espacés de celui-ci, d'une pale de rotor d'éolienne ; et
la réalisation d'une analyse fréquentielle d'un signal de mesure qui indique la torsion,
dans lequel la réalisation de l'analyse fréquentielle comprend :
la détermination d'une fréquence propre de torsion.

5. Procédé selon la revendication 4 comprenant :
la détermination d'un mouvement de flottement de la pale de rotor sur la base de l'analyse fréquentielle.

6. Procédé selon la revendication 4 comprenant en outre :
la détermination d'un impact sur la pale de rotor avec un corps étranger sur la base de la fréquence propre de torsion.

7. Procédé selon une quelconque des revendications 4 à 6, dans lequel la mesure de torsion a lieu en utilisant au moins un autre point sur la pale de rotor, de préférence dans lequel la mesure de torsion a lieu entre au moins deux autres points sur la pale de rotor.

8. Procédé selon la revendication 7, dans lequel la mesure de torsion a lieu dans au moins deux segments de la pale de rotor, dans lequel le premier point et le deuxième point sont situés dans un premier segment de la pale de rotor, et dans lequel au moins un autre point est situé dans un deuxième segment de la pale du rotor.

9. Procédé selon la revendication 8, comprenant en outre :
la détermination par segment d'une vitesse d'affluence.

10. Procédé selon la revendication 8 ou 9, comprenant en outre :
le réglage par segment d'un angle d'attaque et/ou d'un angle de pas de la pale de rotor.

11. Procédé selon la revendication 10, **caractérisé en ce que** le réglage segmentaire de l'incidence est réalisé par des actionneurs locaux, qui sont affectés aux segments individuels.

12. Procédé selon une quelconque des revendications 1 à 11, dans lequel la mesure de la torsion comprend :
la fourniture d'une première fibre de guidage de lumière entre le premier point et le deuxième point de la pale de rotor de telle sorte qu'une torsion de la pale de rotor autour d'un axe de torsion provoque une modification de l'angle de rotation de la première fibre de guidage de lumière du premier point par rapport au deuxième point, de préférence dans lequel la première fibre de guidage de lumière présente une fibre à maintien de non-polarisation au moins dans certaines zones ;
la fourniture d'une deuxième fibre optique qui est reliée à la première fibre optique au niveau du deuxième point ou en relation avec un chemin lumineux du premier point au deuxième point après le deuxième point, et qui s'éloigne du deuxième point, dans lequel de préférence la deuxième fibre est une fibre à maintien de polarisation ;
l'irradiation de la lumière polarisée avec une orientation de polarisation d'entrée connue dans la première fibre optique ;
la détection d'une orientation de polarisation de sortie de la lumière sortant de la deuxième fibre optique ; et
l'évaluation de l'alignement de polarisation de sortie par rapport à l'alignement de polarisation d'entrée pour déterminer la torsion.

13. Dispositif pour faire fonctionner une éolienne, comprenant :
un ou plusieurs capteurs de torsion ; et
un dispositif de commande qui est configuré pour exécuter le procédé selon une quelconque des revendications 1 à 12.
